# EUROPEAN PATENT APPLICATION

(11) **EP 2 071 842 A2**
(43) Date of publication of application: **17.06.2009**
(21) Application number: 08159906.0
(22) Date of filing: 08.07.2008
(51) Int. Cl.: H04N 7/167, H04N 5/913, H04N 5/00

(54) **Apparatus and method for recording scrambled broadcasting data**

(30) Priority: 14.11.2007 KR 20070116205
(71) Applicant: Handan Broadinfocom Co., Ltd., Seoul 135-080 (KR)
(72) Inventor: Han, Chul Wan, Seoul 157-791 (KR)
(74) Representative: TBK-Patent

(57) **Abstract**

The present invention relates to an apparatus and a method for recording broadcasting data. When a stream to be recorded among received broadcasting data streams corresponds to a scrambled stream, a descrambler is allocated to the scrambled stream. The scrambled stream to which the descrambler is allocated is descrambled, split into blocks having a predetermined size and stored. A scrambled stream to which the descrambler is not allocated is split into blocks having a predetermined size and stored.

## Description

### BACKGROUND OF THE INVENTION

### Field of the Invention

The present invention relates to a recording apparatus and method, and more particularly, to an apparatus and method for recording received scrambled broadcasting data.

### Description of the Related Art

A personal video recorder (PVR) is an apparatus that records/reproduces digital broadcasting data using a hard disk.

Recently, a digital TV or a set-top box having a function of recording/reproducing digital broadcasting data using a hard disk has been developed. PVR can allow a user to pause/reproduce broadcasting data while watching the broadcasting data in real time. Furthermore, the PVR can simultaneously store a plurality of broadcasting data signals, and thus a broadcasting schedule can be independently adjusted to suit user's taste.

Digital broadcasting data includes a large amount of pay broadcasting data and broadcasting data transmitted from a broadcasting data provider (such as a broadcasting station) may be scrambled. Accordingly, an apparatus such as a set-top box includes a descrambler capable of descrambling scrambled broadcasting data or is connected to an external descrambler. The descrambler descrambles scrambled broadcasting data such that a user can view the broadcasting data.

In a prior art, however, broadcasting data currently viewed by a user cannot be stored in a descrambled state or previously stored scrambled broadcasting data cannot be stored in a descrambled state even though a descrambler is allocated to the previously stored scrambled broadcasting data to descramble the scrambled broadcasting data. Accordingly, the stored scrambled broadcasting data is descrambled and re-stored, and thus a time required to descramble the broadcasting data is increased and utilization of the descrambler is deteriorated.

Furthermore, since a region for storing scrambled broadcasting data is separated from a region for storing descrambled broadcasting data, the efficiency of a storage unit cannot be improved. Moreover, in the case where stored scrambled broadcasting data is descrambled to be reproduced, if descrambling of the broadcasting data is stopped because a descrambler cannot be allocated to stored scrambled broadcasting data when the stored scrambled broadcasting data is descrambled to be reproduced" it is required to descramble the broadcasting data from the beginning when the broadcasting data is reproduced and descrambled. Accordingly, even a descrambled portion of the broadcasting data should be re-descrambled, and thus the descrambler is wasted and a descrambling time is increased.

### SUMMARY OF THE INVENTION

Accordingly, the present invention has been made to solve the above-mentioned problems occurring in the conventional art, and a primary object of the present invention is to provide a broadcasting data recording apparatus and method for descrambling a scrambled broadcasting data stream, which is split into blocks having a predetermined size and stored, in such a manner that each of the blocks is descrambled only once when a descrambler is allocated to the scrambled broadcasting data stream and re-storing the descrambled broadcasting data stream.

Another object of the present invention is to provide a broadcasting data recording apparatus and method for descrambling a currently broadcasting scrambled broadcasting data stream when a descrambler is allocated to the currently broadcasting scrambled broadcasting data stream while the broadcasting data stream is recorded, and then splitting the descrambled broadcasting data stream into blocks having a predetermined size and storing the descrambled broadcasting data stream.

Yet another object of the present invention is to provide a broadcasting data recording apparatus and method for descrambling stored scrambled broadcasting data and storing the descrambled broadcasting data in a region where the scrambled broadcasting data has been stored without respectively storing the scrambled broadcasting data and the descrambled broadcasting data.

Still another object of the present invention is to provide a broadcasting data recording apparatus and method for embedding a scramble flag in each of scrambled broadcasting data blocks obtained by splitting scrambled broadcasting data, storing the scrambled broadcasting data block by block and, even though descrambling is stopped while the scrambled broadcasting data is being descrambled, continuously descrambling the scrambled broadcasting data block by block from a point at which descrambling is stopped on the basis of the scramble flag.

To accomplish the objects of the present invention, there is provided a broadcasting data recording apparatus comprising a descrambler descrambling a scrambled stream among a currently received plurality of broadcasting data streams when a stream to be recorded corresponds to the scrambled stream, a stream queue splitting the received streams including the scrambled stream into blocks having a predetermined size, a controller setting the predetermined block size such that the stream queue outputs the received streams as blocks having the predetermined size, allocating the descrambler to the scrambled stream and controlling the descrambler to descramble the scrambled stream, and a storage unit storing the received streams.

There is also provided a broadcasting data recording method comprising the steps of receiving a recording signal when a plurality of broadcasting data streams are received, determining whether the stream corresponding to the received recording signal is a scrambled stream and allocating a descrambler to the stream when the received stream corresponds to a scrambled stream, descrambling the scrambled stream to which the descrambler is allocated and then splitting the descrambled stream into blocks having a predetermined size, and splitting a scrambled stream to which the descrambler is not allocated into blocks each having a predetermined size, and storing the scrambled stream and the descrambled stream split into blocks having the predetermined size.

The present invention can descramble broadcasting data scrambled and stored block by block only once at the beginning according to whether a descrambler is allocated to the scrambled broadcasting data and restore the descrambled broadcasting data so as to minimize a time required to descramble stored broadcasting data when the stored broadcasting data is reproduced.

The present invention can descramble currently broadcasting scrambled broadcasting data block by block and store the descrambled broadcasting data so as to minimize a time required to descramble stored broadcasting data when the stored broadcasting data is reproduced.

The present invention can store descrambled broadcasting data in a region where scrambled broadcasting data has been stored so as to prevent broadcasting data from being repeatedly stored and improve the efficiency of a storage space.

Furthermore, the present invention splits broadcasting data scrambled and stored into blocks having a size corresponding to a multiple of a transmission packet unit, embeds a scramble flag in each of the blocks and descrambles the broadcasting data block by block. Accordingly, descrambling continuity can be provided even after descrambling of broadcasting data is stopped, a time required to descramble the broadcasting data can be reduced and utilization of a descrambler can be improved.

### BRIEF DESCRIPTION OF THE DRAWINGS

Further objects and advantages of the invention can be more fully understood from the following detailed description taken in conjunction with the accompanying drawings, in which:
FIG. 1 is a block diagram illustrating principal components of a broadcasting data recording apparatus according to an embodiment of the present invention;
FIG. 2 is a flow chart of a process of storing a received broadcasting data stream according to an embodiment of the present invention;
FIG. 3 is a flow chart of a process of descrambling a stored broadcasting data stream according to an embodiment of the present invention; and
FIG. 4 illustrates stored broadcasting data streams according to an embodiment of the present invention.

### DETAILED DESCRIPTION OF EXEMPLARY EMBODIMENTS OF THE INVENTION

The present invention will now be described more fully with reference to the accompanying drawings, in which exemplary embodiments of the invention are shown. The invention may, however, be embodied in many different forms and should not be construed as being limited to the embodiments set forth therein; rather, these embodiments are provided so that this disclosure will be thorough and complete, and will fully convey the concept of the invention to those skilled in the art.

In embodiments of the present invention, broadcasting data means scrambled pay digital broadcasting data and a broadcasting data stream means a transmission stream generated by demodulating a broadcasting signal transmitted from a provider.

It is desirable that a broadcasting data recording apparatus described in embodiments of the present invention is a set-top box capable of simultaneously tuning multiple channels and having a PVR function. Here, the set-top box is an apparatus that receives broadcasting data, stores the received broadcasting data in a storage unit such as a hard disk, and then provides the stored broadcasting data to a display device or an audio apparatus at the request of a user.

The present invention is not limited to the set-top box and can be applied to any terminal, information communication device and multimedia device capable of receiving digital broadcasting data and storing the received digital broadcasting data in a predetermined storage unit and applications thereof.

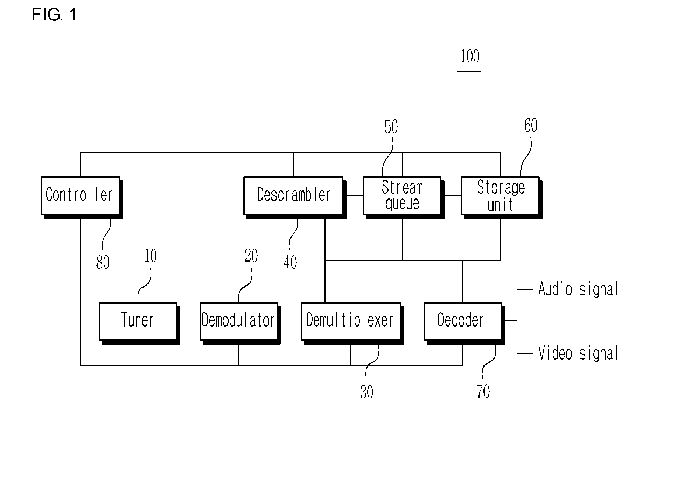

FIG. 1 is a block diagram illustrating main components of a broadcasting data recording apparatus according to an embodiment of the present invention. Referring to FIG. 1, the broadcasting data recording apparatus 100 includes a tuner 10, a demodulator 20, a demultiplexer 30, a descrambler 40, a stream queue 50, a storage unit 60, a decoder 70, and a controller 80.

The tuner 10 outputs a broadcasting signal of a channel tuned by the controller 80 which will be described later among broadcasting signals transmitted from a provider. The tuner 10 receives the broadcasting signal transmitted from the provider and provides the received broadcasting signal to the demodulator 20.

The demodulator 20 demodulates the broadcasting signal of the channel, provided by the tuner 10, to generate a broadcasting data stream (referred to as 'stream' hereinafter) and outputs the stream.

The demultiplexer 30 extracts channel information of the stream generated by the demodulator 20 or a stream stored in the storage unit 60 under the control of the controller 80. The demultiplexer 30 provides a recording stream provided by an input unit (not shown) and a stream of a tuned channel to the descrambler 40, the storage unit 60, and the decoder 70 according to whether the streams are scrambled and whether the descrambler 40 can be allocated under the control of the controller 80.

Streams can be divided into a video stream, an audio stream and a data stream. The data stream can include information on a file structure of broadcasting data and broadcasting information. The information on the file structure and the broadcasting information can include file position information according to a protocol such as IPv4 and IPv6, a program specific information (PSI) table, a service information (SI) table, an electronic service guide (ESG), an electronic program guide (EPG) and so on.

The descrambler 40 descrambles streams sequentially provided by the demultiplexer 30 under the control of the controller 80. The descrambler 40 provides the descrambled streams to the decoder 70.

The stream queue 50 outputs a stream stored in the storage unit 60 as blocks having a predetermined size under the control of the controller 80 and provides the blocks to the storage unit 60.

The storage unit 60 stores streams under the control of the controller 80. Here, the streams include an unscrambled stream, a scrambled stream, and streams having a scrambled stream and a descrambled stream. When a scrambled stream is descrambled, the storage unit 60 stores the descrambled stream in a region in which the scrambled stream has been stored under the control of the controller 80.

The decoder 70 includes a video decoder and an audio decoder, decodes a stream provided by the demultiplexer 30 and outputs the decoded stream. A video stream can be decoded using an H.264 decoder or an MPEG4 decoder and output to a display device.

The controller 80 controls a data flow or a control signal flow in the broadcasting data recording apparatus 100. That is, the controller 80 controls a data flow of each functional block constituting the broadcasting data recording apparatus 100 and generates a control signal for the control.

The controller 80 sets a block size such that the stream queue 50 sequentially outputs a stream as blocks having the set size and embeds a scramble flag in each of the sequentially output blocks. It is desirable that the block size corresponds to a multiple of 188byte that is a transport stream (TS) packet unit. More specifically, the basic unit of a stream corresponds to a TS packet, and a single packet of a stream has a size of 188byte. In the current embodiment of the present invention, the block size is set to a multiple of 188byte corresponding to the TS packet unit in order to prevent stream loss that may occur when descrambling is performed. Furthermore, the block size can be varied to an appropriate value according to embodiments.

Furthermore, the controller 80 retrieves a scrambled stream stored in the storage unit 60 and controls the descrambler 40 to descramble a scrambled block among blocks constituting the retrieved scrambled stream. When the descrambler 40 completes descrambling of the scrambled block, the controller 80 controls the storage unit 60 to store the descrambled block in a region where the scrambled block has been stored. In addition, the controller 80 changes a scramble flag embed in the scrambled block.

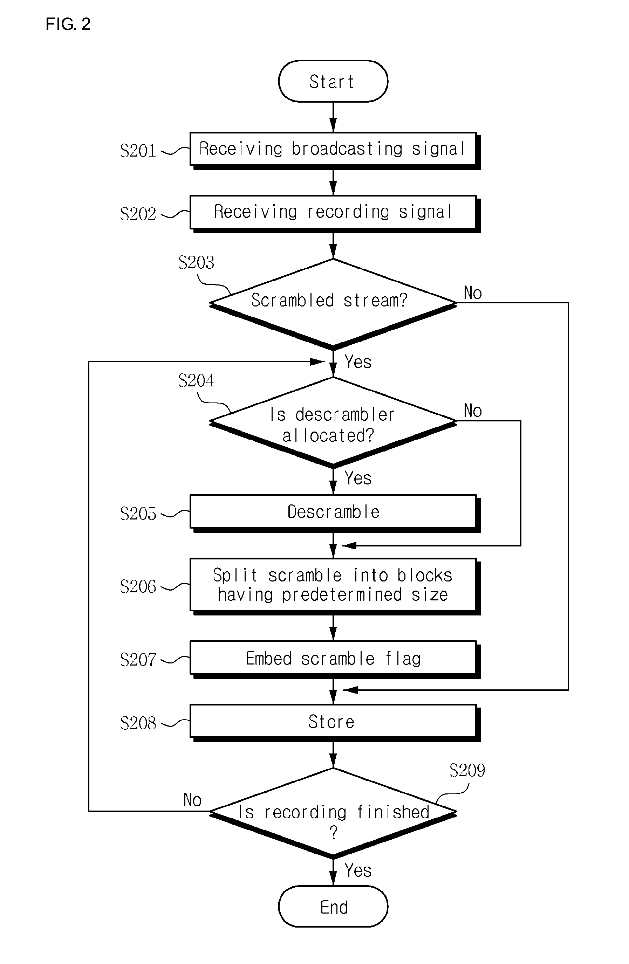

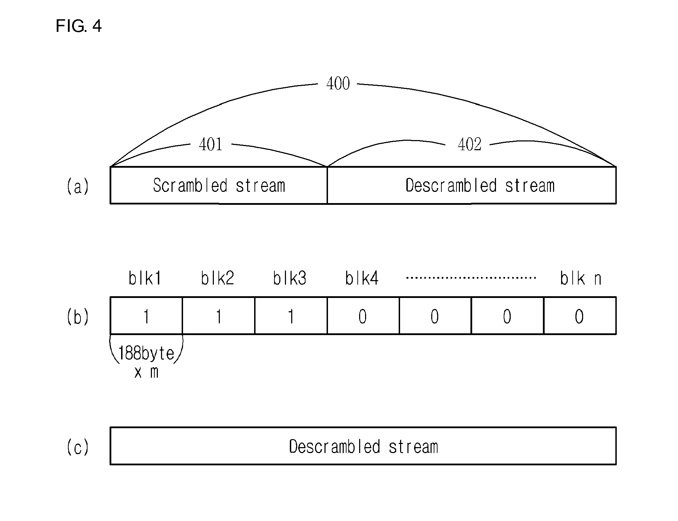

FIG. 2 is a flow chart of a process of storing a received stream according to an embodiment of the present invention and FIG. 4 illustrates stored streams according to an embodiment of the present invention.

Referring to FIGS. 1, 2 and 4, the controller 80 controls the tuner 10 to receive a broadcasting signal from a provider in operation S201 and controls the demodulator 20 to generate a stream from the received broadcasting signal. Here, the received broadcasting signal includes a broadcasting signal to be reproduced and at least one broadcasting signal to be recorded other than the broadcasting signal to be reproduced. The broadcasting signal to be reproduced is converted into a stream through the demodulator 20 and the stream is output as a video signal or an audio signal through the demultiplexer 30. Here, when the stream to be reproduced corresponds to a scrambled stream, the descrambler 40 descrambles the stream.

The controller 80 receives a recording signal to be recorded from an input unit (not shown) in operation S202 and determines whether the received recording signal corresponds to a scrambled stream in operation S203. The controller 80 performs operation S204 when the received recording signal corresponds to a scrambled stream and carries out operation S208 when the received recording signal does not correspond to a scrambled stream.

The controller 80 stores the stream corresponding to the recording signal, which is not a scrambled stream, in the storage unit 60 in operation S208. Here, it is desirable that the stream stored in the storage unit 60 corresponds to a descrambled stream as illustrated in FIG. 4(c).

The controller 80 determines whether the descrambler 40 can be allocated to the stream in operation S204. The controller 80 performs operation S205 when the descrambler 40 can be allocated and carries out operation S206 when the descrambler 40 cannot be allocated.

The controller 80 splits the stream into blocks having a predetermined size in operation S206 when the descrambler 40 cannot be allocated to the stream and performs operation S207. Here, it is desirable that the predetermined block size is a multiple of 188byte corresponding to the TS packet unit.

The controller 80 embeds a scramble flag Set(1) in each of the split blocks in operation S207, and then performs operation S208.

The controller 80 stores the stream having the scramble flag Set(1) embedded therein in the storage unit 60 in operation S208. Here, the stream stored in the storage unit 60 can be a scrambled stream 401 illustrated in FIG. 4(a). Here, it is desirable that the scrambled stream 401 includes a plurality of blocks blk1, blk2 and blk3 as illustrated in FIG. 4(b) because the stream is split into blocks having the predetermined size in operation S206 and the scramble flag Set(1) indicating a scrambled stream is embedded in each of the blocks. Furthermore, a stream stored in the storage unit 60 according to whether the descrambler 40 is allocated can be a stream 400 including a scrambled stream and a descrambled stream as illustrated in FIG. 4(a).

When the descrambler 40 can be allocated to the received stream in operation S204, the controller 80 descrambles the received stream in operation S205. Subsequently, the controller 80 splits the descrambled stream into blocks having a predetermined size, and then performs operation S207. Here, it is desirable that the predetermined block size is a multiple of 188byte corresponding to the TS packet unit.

The controller 80 embeds a scramble flag Clear(0) in each of the split blocks in operation S207.

Then, the controller 80 stores the stream having the scramble flag Clear(0) embedded therein in the storage unit 60 in operation S208. The stream stored in the storage unit 60 can be a descrambled stream 402 illustrated in FIG. 4(a). Here, it is desirable that the descrambled stream 402 includes a plurality of blocks blk4, ..., blkn because the stream 402 is split into blocks having the predetermined size in operation S206 and the scramble flag Clear(0) indicating a descrambled block is embedded in each of the blocks.

The stream which is finally stored in the storage unit 60 when the scrambled stream is recorded can be the stream 400 in which a scrambled stream and a descrambled stream coexist as illustrated in FIG. 4(a), the scrambled stream 401, the descrambled stream 402 illustrated in FIG. 4(a) or the descrambled stream illustrated in FIG. 4(c). Here, the stream can include a plurality of blocks as illustrated in FIG. 4(b). Furthermore, the scramble flag Set(1) indicating a scrambled block and the scramble flag Clear(0) indicating a descrambled block can be embedded in the split blocks of the stream, as illustrated in FIG. 4(b).

When the controller 80 detects the completion of recording of the stream in operation S209, the controller 80 finishes the recording of the stream. When the controller 80 does not detect the completion of recording of the stream in operation S209, the controller 80 returns to operation S203 and performs the aforementioned operations on sequentially received streams.

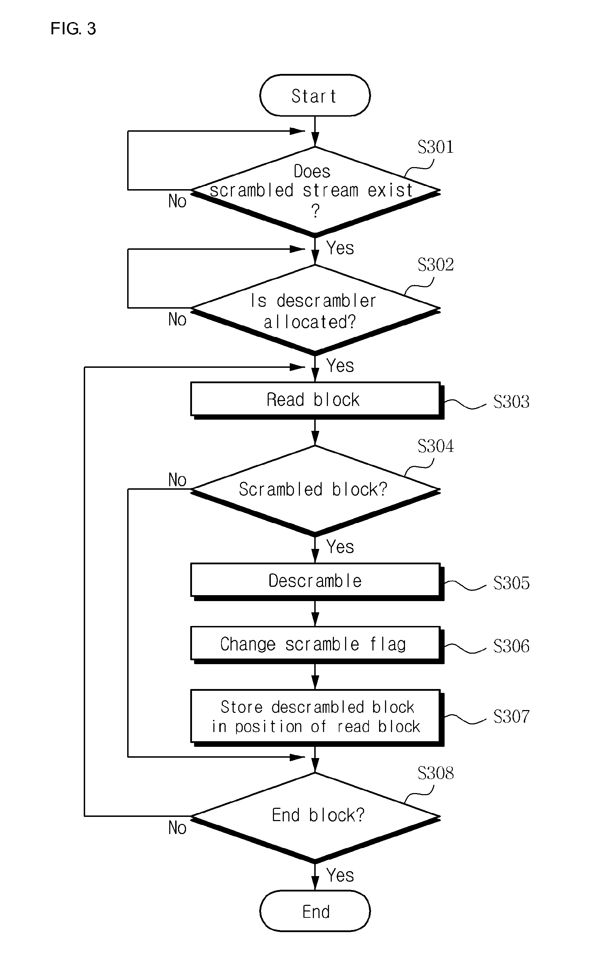

FIG. 3 is a flow chart of a process of descrambling a stored stream.

Referring to FIGS. 1, 2, 3 and 4, the controller 80 checks whether streams stored in the storage unit 60 include a scrambled stream in operation S301. The controller 80 determines whether the descrambler 40 can be allocated in operation S302 when the streams stored in the storage unit 60 include a scrambled stream in operation S301. The controller 80 performs operation S303 when it is determined that the descrambler 40 can be allocated.

The controller 80 reads a stream, which is split into blocks and stored in the storage unit 60, block by block in operation S303. Here, the stream can be represented as illustrated in FIG. 4(b). For example, the controller 80 sequentially reads blocks blk2, blk2 and blk3 which constitute the stream in operation S303. The controller 80 performs operation S305 when detecting that the block blk1 is scrambled.

The controller 305 controls the descrambler 40 to descramble the block blk1 in operation S305. Subsequently, the controller 80 changes a scramble flag Set(1) embedded in the block blk1 to Clear(0) and stores the descrambled block in the region in which the read block blk1 has been stored in operation S307. More specifically, the controller 80 changes Set(1) embedded in the block blk1 to clear(0) and stores the descrambled block blk1 in the position of the scrambled block blk1 so as to secure efficiency of a storage region.

When the block blk1 is not a scrambled block in operation S304, the controller 80 determines whether the block blk1 corresponds to the end block of the stream in operation S308.

The controller 80 returns to operation S303 and performs the aforementioned operations on the stream from the block blk2 when the block blk1 is not the end block of the stream in operation S308. The controller 80 finishes the operation of descrambling the stream when the block blk1 corresponds to the end block of the stream.

The stream stored in the storage unit 60 in operation S307 becomes a descrambled stream as illustrated in FIG. 4(c). More specifically, scrambled blocks are respectively descrambled and stored in the positions of the scrambled blocks such that the scrambled blocks are updated to the descrambled blocks, and thus the descrambled stream illustrated in FIG. 4(c) is stored in the storage unit 60 after the end block is descrambled.

When the descrambler cannot be allocated when a scrambled stream is descrambled, which is not illustrated, the controller 80 stops the descrambling operation. When the descrambler 40 can be allocated, the controller 80 retrieves a scramble flag stored in the storage unit 60 and descrambles the scrambled stream from a block corresponding to the retrieved scramble flag, and thus descrambling can be continuously performed from the point at which descrambling is stopped.

The broadcasting data recording apparatus and method according to the present invention has been particularly shown and described with reference to exemplary embodiments thereof. It will be understood by those of ordinary skill in the art that various changes in form and details may be made therein without departing from the spirit and scope of the present invention as defined by the following claims.
The present invention relates to an apparatus and a method for recording broadcasting data. When a stream to be recorded among received broadcasting data streams corresponds to a scrambled stream, a descrambler is allocated to the scrambled stream. The scrambled stream to which the descrambler is allocated is descrambled, split into blocks having a predetermined size and stored. A scrambled stream to which the descrambler is not allocated is split into blocks having a predetermined size and stored.

## Claims

1. A broadcasting data recording apparatus comprising:
a descrambler descrambling a scrambled stream among a currently received plurality of broadcasting data streams when a stream to be recorded corresponds to the scrambled stream;
a stream queue splitting the received streams including the scrambled stream into blocks having a predetermined size;
a controller setting the predetermined block size such that the stream queue outputs the received streams as blocks having the predetermined size, allocating the descrambler to the scrambled stream and controlling the descrambler to descramble the scrambled stream; and
a storage unit storing the received streams.

2. The broadcasting data recording apparatus according to claim 1, wherein the streams stored in the storage unit comprise at least one of an unscrambled stream, a scrambled stream and a stream in which a scrambled stream and a descrambled stream coexist.

3. The broadcasting data recording apparatus according to claim 2, wherein the controller retrieves the scrambled stream stored in the storage unit, sequentially reads the blocks constituting the retrieved scrambled stream and controls the descrambler to descramble the read blocks when the read blocks are scrambled blocks.

4. The broadcasting data recording apparatus according to claim 3, wherein the controller controls the storage unit to store the descrambled blocks in the regions in which the read blocks have been located when descrambling of the read blocks is finished.

5. The broadcasting data recording apparatus according to claim 2, wherein the predetermined block size corresponds to a multiple of the basic unit of the streams.

6. The broadcasting data recording apparatus according to claim 3, wherein the controller embeds a scramble flag in each of the blocks having the predetermined size, split by the stream queue.

7. The broadcasting data recording apparatus according to claim 6, wherein the controller changes the scramble flag embedded in each of blocks constituting the stream when descrambling of the blocks is finished.

8. A broadcasting data recording method comprising the steps of:
receiving a recording signal when a plurality of broadcasting data streams are received;
determining whether the stream corresponding to the received recording signal is a scrambled stream and allocating a descrambler to the stream when the received stream corresponds to a scrambled stream;
descrambling the scrambled stream to which the descrambler is allocated and then splitting the descrambled stream into blocks having a predetermined size, and splitting a scrambled stream to which the descrambler is not allocated into blocks each having a predetermined size; and
storing the scrambled stream and the descrambled stream split into blocks having the predetermined size.

9. The broadcasting data recording method according to claim 8, further comprising the step of embedding a scramble flag in each of the split blocks after the step of splitting the stream into the blocks having the predetermined size.

10. The broadcasting data recording method according to claim 9, further comprising the steps of:
retrieving a scrambled stream among the stored streams when the descrambler can be allocated after the scrambled stream is stored;
sequentially reading blocks of the retrieved scrambled stream; and
descrambling the read blocks when the read blocks are scrambled blocks.

11. The broadcasting data recording method according to claim 10, further comprising the step of storing the descrambled blocks in the regions where the read blocks were been located when descrambling of the read blocks is finished.

12. The broadcasting data recording method according to claim 11, further comprising the step of changing scramble flags embedded in the read blocks when descrambling of the read blocks is finished.

13. The broadcasting data recording method according to claim 9, further comprising the steps of:
determining whether the first block of the read blocks is the end block of the stored stream when the read blocks are not scrambled blocks; and
reading a block following the first block and determining whether the read block is a scrambled block when the first block is not end block.

14. The broadcasting data recording method according to claim 8, further comprising the step of determining whether the received stream is a scrambled stream and storing the received stream when the received stream is not scrambled.
